# FASCICULE DE BREVET EUROPEEN

(11) **EP 3 870 419 B1**
(45) Date de publication et mention de la délivrance du brevet: **07.02.2024**
(21) Numéro de dépôt: 19786609.8
(22) Date de dépôt: 17.10.2019
(51) Int. Cl.: B29C 45/14, B29C 45/16, B29C 45/26, B60R 13/00

(54) **PIÈCE DE CARROSSERIE COMPRENANT UN ÉLÉMENT DE DÉCORATION**
KAROSSERIETEIL MIT EINEM DEKORATIVEN ELEMENT
BODYWORK PART COMPRISING A DECORATIVE ELEMENT

(30) Priorité: 24.10.2018 FR 1859835
(43) Date de publication de la demande: 01.09.2021
(73) Titulaire: Compagnie Plastic Omnium, 69007 Lyon (FR)
(72) Inventeur: STABLO, Frédéric, 01150 Sainte-Julie (FR)
(74) Mandataire: LLR
(86) Numéro de dépôt international: PCT/EP2019/078276
(87) Numéro de publication internationale: WO 2020/083749

(56) Documents cités:
- EP-A1- 1 818 698
- EP-A1- 3 275 614
- EP-A2- 1 439 094
- CN-U- 207 403 536
- DE-A1-102010 042 939
- FR-A1- 2 830 211
- FR-A1- 2 988 349
- JP-A- 2005 212 699
- US-A1- 2013 280 452

## Description

L'invention concerne l'industrie automobile, et notamment les pièces de carrosserie automobile fabriquées par injection d'un matériau thermoplastique, et plus particulièrement de telles pièces comportant un motif décoratif.

En particulier, l'invention concerne un panneau décoré pour véhicule automobile.

De nombreux véhicules automobiles comprennent aujourd'hui des éléments de décoration rapportés sur la carrosserie, appelés panneaux décorés.

On connaît des panneaux décorés fabriqués par injection de matière thermoplastique, transparente ou translucide, et comprenant sur une face dite « interne », un film décoratif, visible depuis l'extérieur du véhicule sur la face dite « externe ». Ce film décoratif interne est donc protégé dans le temps contre l'humidité, les rayures, le vieillissement de l'adhésif, la poussière, le gravillonnage, etc.

De tels panneaux sont généralement fixés sur un cadre, lui-même rapporté sur la carrosserie du véhicule. On connaît par exemple des cadres rapportés au-dessus des calandres qui se fixent le plus souvent sur la peau de pare-chocs.

Cependant, l'utilisation d'un tel cadre augmente la surface finale de l'ensemble, ce qui n'est pas toujours souhaité ou possible.

De plus, il est parfois nécessaire que le panneau décoré soit lui-même muni d'un cadre, afin qu'un même panneau puisse être monté sur différents véhicules.

Enfin, il est parfois nécessaire de fixer une pièce, telle qu'un cadre, mais également toute pièce décorative, directement sur le panneau décoré.

Une telle pièce ajoutée est solidaire du panneau décoré (à la différence des cadres rapportés), et induit un contact direct du panneau décoré avec les moyens de fixation de la pièce ajoutée, voire avec la pièce elle-même. Pour des raisons de fixation, et éventuellement d'étanchéité, le contact est nécessaire.

Mais un tel contact entraine des phénomènes de grincement. Notamment si l'on utilise une fixation directe au moyen d'une vis par exemple, les vibrations vont engendrer un bruit excessif.

Il pourrait être envisagé d'utiliser des éléments tels que des joints (rondelles élastomères), mais l'assemblage deviendrait alors plus complexe, nécessitant une gestion plus complexe des éléments à assembler et un temps de production plus important.

De plus, les moyens de fixations, tels que des vis, peuvent engendrer des fissurations du panneau au niveau de la zone de serrage de la vis. Le document JP 2005 212699 A divulgue un panneau de décoration selon le préambule de la revendication 1.

La présente invention a pour but de remédier à ces inconvénients en fournissant un panneau décoré apte à recevoir une pièce directement fixée sur le panneau, limitant les phénomènes de fissuration, et les phénomènes de grincement, et ne nécessitant pas l'utilisation d'un grand nombre d'éléments à assembler.

Ainsi, l'objet de l'invention concerne un panneau de décoration pour véhicule automobile, avec les caractéristiques de la revendication 1.

Le panneau peut en outre comporter l'une ou plusieurs des caractéristiques suivantes, prises seules ou en combinaison :
- les surépaisseurs locales sont aptes à renforcer mécaniquement la zone de fixation ;
- les surépaisseurs locales comportent une surépaisseur locale du film décoratif et/ou une surépaisseur locale du corps principal et/ou une surépaisseur locale de la couche de protection ;
- le corps principal est réalisé en utilisant au moins l'une des matières suivantes : polyméthacrylate de méthyle, en polyamide, en polycarbonate, en polyuréthane, en polypropylène, en cyclo-oléfines copolymères ou en cyclo-oléfines-polymères ;
- le film décoratif est réalisé en utilisant au moins l'une des matières suivantes : de l'Acrylonitrile Butadiène Styrène translucide, du polypropylène, du Polycarbonate, du polyamide, du Polyméthacrylate de Méthyle, du polyuréthane et du polyéthylène téréphtalate ;
- la couche de protection est choisie parmi : un film, une couche déposée par pulvérisation, ou une couche injectée.

Les surépaisseurs locales permettent :
- de limiter les risques de fissuration du panneau ;
- de renforcer mécaniquement le panneau ;
- de limiter le contact avec des matières susceptibles de provoquer des bruits par vibrations, et donc de limiter le phénomène de grincement.

De plus, ces surépaisseurs permettent de préserver l'étanchéité entre les deux éléments.

L'invention concerne également un véhicule automobile comportant au moins un panneau de décoration selon l'invention.

Selon l'invention, la première pièce est fixée sur le panneau de décoration avec un moyen de fixation, et les surépaisseurs locales évitent un contact entre le corps principal et le moyen de fixation et/ou la première pièce.

Le panneau de décoration peut être rapporté sur au moins une des secondes pièces de carrosserie suivantes : face avant, aile, porte, toit, hayon, pare-chocs arrière.

L'invention concerne également un procédé de fabrication d'un panneau décoré selon l'invention, à l'aide d'au moins un moule comprenant une chambre de moulage. Le procédé comprend les étapes suivantes :
- moulage du corps principal à partir d'une matière plastique ; et
- surmoulage d'au moins un élément de surface sur au moins une surface du corps principal, la chambre de moulage comportant au moins un volume apte à former des surépaisseurs 60 locales du corps principal 20, ou la chambre de moulage comportant au moins un volume apte à former des surépaisseurs 60 locales de l'élément de surface ; ou
- dépose d'au moins un élément de surface comportant une surépaisseur, sur au moins une surface du corps principal après moulage du corps principal, ou sur au moins une paroi du moule avant moulage du corps principal.

On peut mouler le corps principal en injectant au moins l'une des matières suivantes : polyméthacrylate de méthyle, en polyamide, en polycarbonate, en polyuréthane, en polypropylène, en cyclo-oléfines copolymères ou en cyclo-oléfines-polymères.

Selon un premier mode de réalisation, le moule comprend une première partie et une seconde partie, les deux parties délimitant une première chambre de moulage, et le procédé comprend les étapes suivantes :
- dépôt du film décoré sur une paroi de la seconde partie, le film décoré comportant au moins une surépaisseur locale ;
- première fermeture du moule ;
- injection d'une première matière thermoplastique dans la première chambre de moulage afin de surmouler le corps principal sur le film décoré ;
- ouverture du moule ;
- seconde fermeture du moule, de façon à former une seconde chambre de moulage en utilisant une presse rotative ou une translation, la seconde chambre de moulage comportant des volumes aptes à former des surépaisseurs locales de la couche de protection ; et
- injection d'une seconde matière thermoplastique dans la seconde chambre de moulage pour obtenir la couche de protection sur la face opposée.

Selon un second mode de réalisation, le moule comprend une première partie et une seconde partie, les deux parties délimitant une première chambre de moulage, et le procédé comprend les étapes suivantes :
- dépôt du film décoré sur une paroi de la seconde partie ;
- première fermeture du moule ;
- injection d'une première matière thermoplastique dans la première chambre de moulage afin de surmouler le corps principal sur le film décoré, la première chambre de moulage comportant des volumes aptes à former les surépaisseurs locales du corps principal ;
- on réalise ainsi une nervure bombée au niveau de la zone de fixation, la nervure formant une surépaisseur locale.
- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir la couche de protection sur la face opposée.

Selon un troisième mode de réalisation, le moule comprend une première partie et une seconde partie, les deux parties délimitant une première chambre de moulage, et le procédé comprend les étapes suivantes :
- dépôt de la couche de protection sur une paroi de la seconde partie ;
- première fermeture du moule ;
- injection d'une première matière thermoplastique dans la première chambre de moulage afin de surmouler le corps central sur la couche de protection, la première chambre de moulage comportant des volumes aptes à former les surépaisseurs locales du corps principal ;

- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir le film décoré sur la face décorée.

L'invention sera mieux comprise à la lecture des figures annexées, qui sont fournies à titre d'exemples et ne présentent aucun caractère limitatif, dans lesquelles :
- la figure 1 illustre un véhicule automobile muni d'un panneau décoré selon l'invention ;
- la figure 2 représente une section du panneau décoré de la figure 1 ;
- la figure 3 représente la section du panneau décoré de la figure 1, lorsque le panneau est muni d'une pièce, selon un premier mode de réalisation selon lequel la couche de protection et le film décoratif forment des surépaisseurs ;
- la figure 4 représente la section du panneau décoré de la figure 1, lorsque le panneau est muni d'une pièce, selon un second mode de réalisation selon lequel le corps principal forme des surépaisseurs ;
- la figure 5 représente la section du panneau décoré de la figure 1, lorsque le panneau est muni d'une pièce, selon un troisième mode de réalisation selon lequel le corps principal forme une surépaisseur du côté de la couche de protection, et le film décoratif forme une surépaisseur du côté opposé.

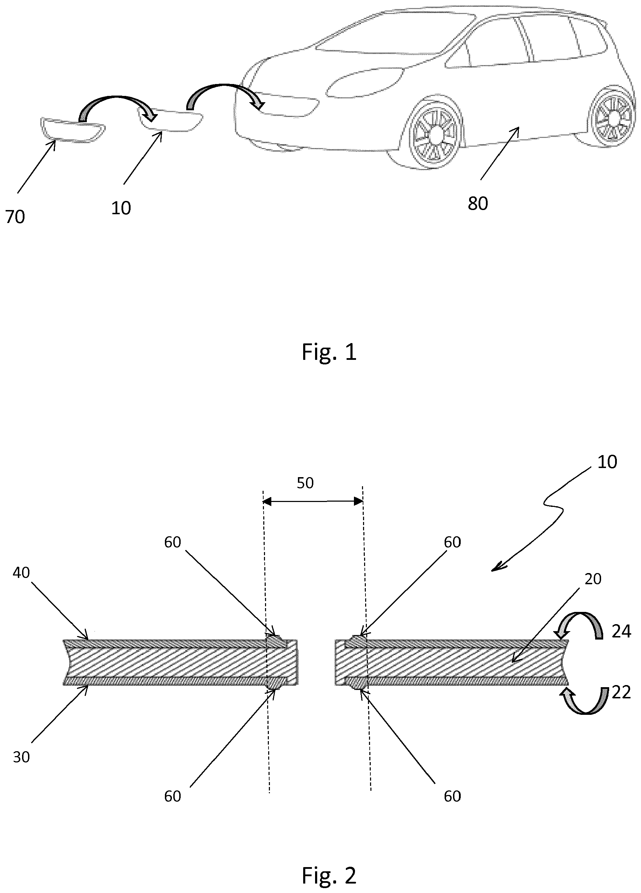

On se réfère maintenant à la figure 1 qui illustre un véhicule automobile 80 muni d'un panneau décoré 10 positionné, selon cet exemple de réalisation, sur la face avant du véhicule 80.

Le panneau de décoration 10 comporte un corps principal 20 réalisé en matière plastique transparente ou translucide.

Sur l'une de ses faces, le corps principal 20 comporte un film décoratif 30 (premier élément de surface). Cette face est appelée « face décorée » 22.

Sur l'autre de ses faces, appelée « face opposée » 24, le corps principal 20 comporte une couche de protection 40 (second élément de surface).

Lorsque le panneau décoré 10 est monté sur la face avant du véhicule 80, la face décorée 22 est la face tournée vers l'arrière du véhicule, et la face opposée 24 est la face tournée vers l'avant du véhicule.

Le corps principal 20 peut être réalisée en utilisant au moins l'une des matières suivantes : polyméthacrylate de méthyle, en polyamide, en polycarbonate, en polyuréthane, en polypropylène, en cyclo-oléfines copolymères ou en cyclo-oléfines-polymères.

Le film décoratif 30 peut être réalisé en utilisant au moins l'une des matières suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU) et du polyéthylène téréphtalate (PET).

La couche de protection 40 peut être un film (par exemple en polyuréthane), une couche déposée par pulvérisation (par exemple un vernis), ou encore, une couche injectée (par exemple du type polyuréthane).

Le panneau de décoration 10 comporte également au moins une zone de fixation 50 d'une pièce 70. Selon l'exemple des figures 2, 3 et 4, la zone de fixation 50 comporte un orifice traversant. Cet orifice est apte à recevoir un moyen de fixation 55, tel qu'une vis, un rivet, un clip ou tout autre moyen apte à coopérer avec cet orifice afin de fixer une pièce 70 sur le panneau 10.

La pièce 70 peut être un cadre, fixé sur le panneau 10, et non autour du panneau 10. La pièce 70 peut également être une baguette, une vis décorée, un emblème, une grille latérale...

Comme illustré sur les figures 2, 3, 4 et 5, la face décorée 22 et/ou la face opposée 24 comportent des surépaisseurs 60 locales autour de l'orifice traversant. Les surépaisseurs locales 60 définissent les limites latérales de la zone de fixation 50.

Les surépaisseurs 60 locales sont situées sur au moins l'une des faces décorée 22 et opposée 24 du corps principal 20. Mais de préférence les surépaisseurs 60 locales sont situées de part et d'autre du corps principal 20, comme illustré sur les figures 2, 3, 4 et 5.

Les surépaisseurs locales 60 comportent une surépaisseur locale du film décoratif 30 et/ou une surépaisseur locale du corps principal 20 et/ou une surépaisseur locale de la couche de protection 40.

Ces surépaisseurs locales 60 permettent de renforcer mécaniquement le panneau 10 au niveau de la zone de fixation 50.

Ces surépaisseurs locales 60 permettent également d'éviter, lors du serrage de la pièce 70 au niveau de la zone de fixation 50, que le panneau 20 ne se fissure.

Enfin, les surépaisseurs locales 60 permettent d'éviter que des matières susceptibles d'être mises en contact ne provoquent des grincements. Il s'agît des matières de la pièce 70 et la matière de la pièce 20 notamment, mais aussi de la matière du moyen de fixation 55 et la matière de la pièce 20. En évitant ce contact de matière, les surépaisseurs empêchent un grincement issu d'un contact entre la pièce 70 et le corps principal 20 et/ou entre le moyen de fixation 55 et le corps principal 20. En effet, sans ces surépaisseurs 60, la force de serrage pourrait amener ces matières à être en contact.

Ainsi les surépaisseurs 60 ont pour fonction de renforcer le panneau 10 au niveau de la zone de fixation 50, et de maintenir à distance, même après serrage, le corps 20 de la pièce 70 et du moyen de fixation 55.

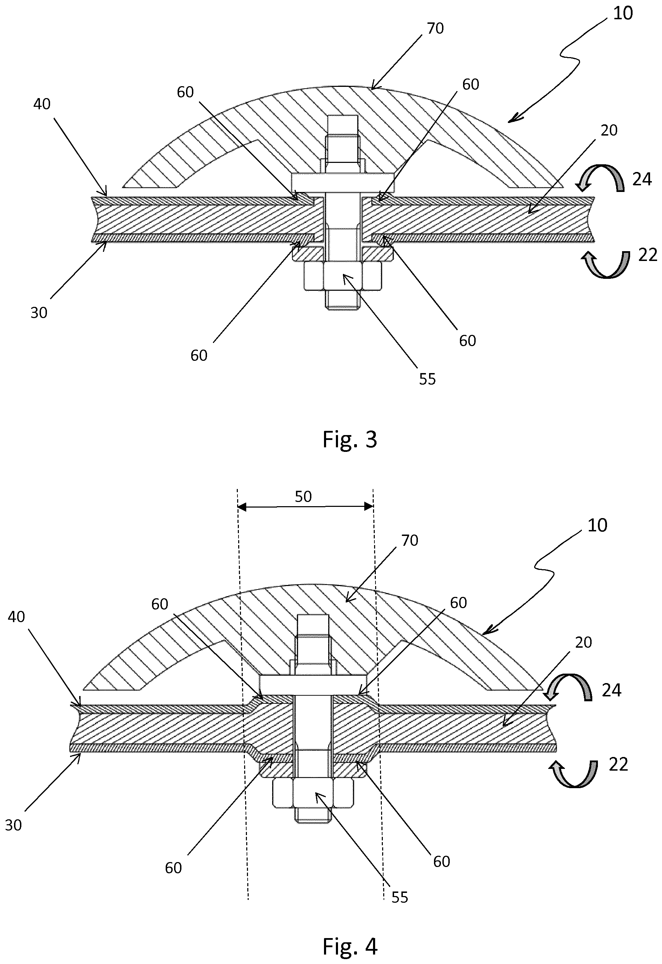

Selon un premier mode de réalisation, illustré par la figure 3, le corps principal 20 est d'épaisseur constante au moins au niveau de la zone de fixation 50. Les surépaisseurs 60 locales de la face décorée 22 sont formées par une surépaisseur locale du film décoratif 30, et les surépaisseurs 60 locales de la face opposée 24 sont formées par une surépaisseur locale de la couche de protection 40.

Selon un second mode de réalisation, illustré par la figure 4, le film décoratif 30 et la couche de protection 40 sont d'épaisseur constante au moins au niveau de la zone de fixation 50. Les surépaisseurs 60 locales de la face décorée 22 et les surépaisseurs 60 locales de la face opposée 24 sont formées par une surépaisseur locale du corps principal 20.

Bien entendu une combinaison des deux modes de réalisation est envisagée. Ainsi, la surépaisseur 60 locale de la face décorée 22 peut comporter une surépaisseur locale du film décoratif 30 et/ou une surépaisseur locale du corps principal 20, et la surépaisseur 60 locale de la face opposée 24 peut comporter une surépaisseur locale de la couche de protection 40 et/ou une surépaisseur locale du corps principal 20.

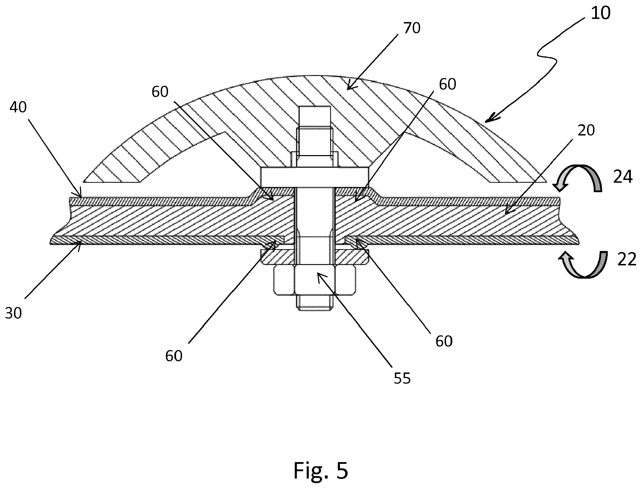

Par exemple, selon un troisième mode de réalisation, illustré par la figure 5, la surépaisseur 60 locale de la face décorée 22 comporte une surépaisseur locale du film décoratif 30, et la surépaisseur 60 locale de la face opposée 24 comporte une surépaisseur locale du corps principal 20.

L'invention concerne le panneau décoré 10 muni de la pièce 70 fixée sur le panneau de décoration 10.

L'invention concerne également un véhicule automobile 80 comportant au moins un panneau de décoration 10 selon l'invention.

Le ou les panneaux de décoration 10 peuvent être rapportés sur le véhicule 80 sur au moins une des pièces suivantes : face avant, aile, porte, toit, hayon, pare-chocs arrière.

L'invention concerne également un procédé de moulage d'un panneau décoré 10 selon l'invention.

Le procédé utilise au moins un moule d'injection comprenant une première partie et une seconde partie, les deux parties délimitant une chambre de moulage.

Selon ce procédé, le corps principal 20 est réalisé par moulage d'une matière plastique. Par exemple, la matière peut être choisie seule ou en combinaison parmi au moins l'une des matières suivantes : polyméthacrylate de méthyle, en polyamide, en polycarbonate, en polyuréthane, en polypropylène, en cyclo-oléfines copolymères ou en cyclo-oléfines-polymères.

Pour décrire le procédé, nous allons appeler « élément de surface » le film décoratif 30 ou la couche de protection 40.

Selon le procédé, l'obtention d'un élément de surface sur le panneau 10 peut être réalisée par :
- dépose sur le corps principale 20 déjà moulé ;
- dépose sur une paroi du moule avant moulage du corps principal 20 ; ou
- surmoulage du corps principal 20.

Ainsi, de façon générale, le procédé comprend les étapes suivantes :
1. moulage du corps principal (20) à partir d'une matière plastique au moyen du moule ;
2. surmoulage d'au moins un élément de surface (30, 40) sur au moins une surface (22, 24) du corps principal (20), la chambre de moulage comportant au moins un volume apte à former des surépaisseurs 60 locales du corps principal 20, ou la chambre de moulage comportant au moins un volume apte à former des surépaisseurs 60 locales de l'élément de surface (30, 40) ; ou
   dépose d'au moins un élément de surface (30, 40) comportant une surépaisseur (60), sur au moins une surface (22, 24) du corps principal (20) après moulage du corps principal (20), ou sur au moins une paroi du moule avant moulage du corps principal (20).

Ainsi, le film décoratif 30 peut être déposé sur le corps principal 20, une fois ce corps moulé, ou alors le film décoratif 30 peut être déposé sur une paroi de la première partie du moule avant moulage du corps principal 20.

Une autre alternative, consiste à réaliser le film décoratif 30 par surmoulage du corps principal 20 en utilisant au moins l'une des matières plastiques suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU) et du polyéthylène téréphtalate (PET).

De la même façon, la couche de protection 40 (par exemple un vernis) peut être déposée sur le corps principal 20, une fois ce corps moulé, ou alors la couche de protection 40 (par exemple un film en polyuréthane) peut être déposée sur une paroi de la seconde partie du moule avant moulage du corps principal 20. Et, selon une alternative, la couche de protection 40 peut être réalisée par surmoulage du corps principal 20 en utilisant une matière plastique du type polyuréthane (PU) par exemple.

Après réalisation du panneau de décoration 10, on usine le panneau au niveau du zone de fixation 50, afin, par exemple de réaliser un orifice traversant dans le panneau 10 et à travers le film décoré 30 et la couche de protection 40. L'orifice traversant peut également être réalisé lors des étapes de moulage.

Enfin, on fixe la pièce 70 rapportée sur le panneau décoré 10, en écrasant les deux surépaisseurs 60 locales de chaque côté (faces 22 et 24) du corps principal 20.

La fixation peut être réalisée au moyen d'une vis et d'un écrou (figures 3, 4 et 5), d'un clip, d'un rivet...

Différents modes de réalisation du procédé sont décrits ci-après.

### Procédés permettant de réaliser un panneau 10 tel qu'illustré sur la figure 3

Selon cet exemple les deux éléments de surface 30 et 40 comportent des surépaisseurs locales, alors que le corps principal 20 est d'épaisseur sensiblement constante, à l'exception d'une surépaisseur très localisée autours de l'orifice de la zone de fixation. En effet, comme illustré sur la figure 4, le corps 20 comporte en section et sur chaque face 22 et 24, un épaulement 26. Ces épaulements forment un « muret » 28 le long de l'orifice de la zone de fixation 50. Ces épaulements 26 permettent de maitriser l'injection ultérieure du film décoratif 30 et de la couche de protection 40. Ce « muret » 28 forme sur chaque face une surépaisseur très localisée au niveau de la zone de fixation 50. Ces surépaisseurs sont d'épaisseurs sensiblement égales à celle du film décoratif 30 et à celle de la couche de protection 40. Ainsi la surépaisseur du film décoratif 30 et celle de la couche de protection 40 sont également en surépaisseur de cette surépaisseur du corps principal 20.

Selon un exemple de réalisation, le procédé comporte alors les étapes suivantes :
- dépôt du film décoré 30 sur une paroi du seconde partie, le film décoré 30 comportant au moins une surépaisseur 60 locale ;
- première fermeture du moule ;
- injection d'une première matière thermoplastique dans la première chambre de moulage afin de surmouler le corps principal 20 sur le film décoré 30 ;
- ouverture du moule ;
- seconde fermeture du moule, de façon à former une seconde chambre de moulage en utilisant une presse rotative ou une translation, la seconde chambre de moulage comportant des volumes aptes à former des surépaisseurs locales de la couche de protection 40 ; et
- injection d'une seconde matière thermoplastique dans la seconde chambre de moulage pour obtenir la couche de protection 40 sur la face opposée 24.

A noter que le film décoré 30 peut également être obtenu par surmoulage, comme la couche de protection 40. Et inversement, la couche de protection 40 peut être déposée sur une paroi de la seconde partie du moule avant moulage du corps principal 20.

### Procédés permettant de réaliser un panneau 10 tel qu'illustré sur la figure 4

Selon cet exemple les deux éléments de surface ont des épaisseurs constantes. C'est le corps principal 20 qui porte les surépaisseurs locales 60. Selon un exemple de réalisation, le procédé comporte les étapes suivantes :
- dépôt du film décoré 30 sur une paroi de la seconde partie ;
- première fermeture du moule ;
- injection d'une première matière thermoplastique dans la première chambre de moulage afin de surmouler la paque centrale 20 sur le film décoré 30, la première chambre de moulage comportant des volumes aptes à former les surépaisseurs 60 locales du corps principal 20 ; on réalise ainsi une nervure bombée au niveau de la zone de fixation 50, la nervure formant une surépaisseur 60 locale.
- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir la couche de protection 40 sur la face opposée 24.

A noter que le film décoré 30 et/ou la couche de protection 40 peuvent également être déposées sur le corps principal 20 après moulage de ce dernier (film adhésif ou par pulvérisation par exemple).

### Procédés permettant de réaliser un panneau 10 tel qu'illustré sur la figure 5

Selon cet exemple l'un des éléments de surface comporte une surépaisseur locale 60, et le corps principal 20 comporte une surépaisseur locale 60 sur la face opposée à la face portant l'élément de surface comportant une surépaisseur 60. Selon l'exemple de la figure 5, la face 22 porte un film décore comportant une surépaisseur 60. Le corps principal 20 comporte alors une surépaisseur au niveau de la face opposée 24. Selon un exemple de réalisation, le procédé comporte les étapes suivantes :
- dépôt de la couche de protection 40 sur une paroi de la seconde partie ;
- première fermeture du moule ;
- injection d'une première matière thermoplastique dans la première chambre de moulage afin de surmouler le corps central 20 sur la couche de protection 40, la première chambre de moulage comportant des volumes aptes à former les surépaisseurs 60 locales du corps principal 20 (sur la face opposée 24) ;
- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir le film décoré 30 sur la face décorée 22.

A noter que la couche de protection 40 peut également être obtenue par surmoulage, comme le film décoré 30. Et inversement, le film décoré 30 peut être déposé sur une paroi de la seconde partie du moule avant moulage du corps principal 20.

### LISTE DES REFERENCES

- 10 :: panneau de décoration pour véhicule automobile 80
- 20 :: corps principal du panneau de décoration 10, réalisée en matière plastique transparente ou translucide
- 22 :: face décorée du corps principal 20
- 24 :: face opposée à la face décorée 22
- 26 :: épaulement du corps principal 20
- 28 :: muret formé par les épaulements 26
- 30 :: film décoratif rapporté sur la face décorée 22
- 40 :: couche de protection rapportée sur la face opposée 24
- 50 :: zone de fixation d'une pièce 70 sur le panneau de décoration 10
- 55 :: moyen de fixation d'une pièce 70 sur le panneau de décoration 10
- 60 :: surépaisseurs locales du panneau de décoration 10
- 70 :: pièce fixée sur le panneau de décoration 10
- 80 :: véhicule automobile

## Revendications

1. Panneau de décoration (10) pour véhicule automobile, comportant un corps principal (20) réalisé en matière plastique transparente ou translucide, un film décoratif (30) sur une face décorée (22) du corps principal (20), le panneau de décoration (10) comportant au moins une zone de fixation (50) d'une première pièce (70) sur le panneau de décoration (10), ladite zone de fixation comporte un orifice traversant, la face décorée (22) et/ou la face opposée (24) comportant des surépaisseurs (60) locales au niveau de ladite zone de fixation (50), le panneau de décoration (10) étant destiné à être rapporté sur le véhicule automobile sur au moins une des secondes pièces suivantes : face avant, aile, porte, toit, hayon, pare-chocs arrière, le panneau de décoration comportant au moins une première pièce (70) fixée sur le panneau de décoration (10) avec un moyen de fixation (55), le panneau de décoration étant **caractérisé en ce qu'**il comporte une couche de protection (40) sur une face opposée (24) à la face décorée (22) et **en ce que** les surépaisseurs (60) locales évitent un contact entre le corps principal (20) et le moyen de fixation (55) et/ou la première pièce (70).

2. Panneau de décoration (10) selon la revendication 1, dans lequel les surépaisseurs (60) locales sont aptes à renforcer mécaniquement la zone de fixation (50).

3. Panneau de décoration (10) selon l'une des revendications précédentes, dans lequel les surépaisseurs (60) locales comportent une surépaisseur locale du film décoratif (30) et/ou une surépaisseur locale du corps principal (20) et/ou une surépaisseur locale de la couche de protection (40).

4. Panneau de décoration (10) selon l'une des revendications précédentes, dans lequel le corps principal (20) est réalisé en utilisant au moins l'une des matières suivantes : polyméthacrylate de méthyle, en polyamide, en polycarbonate, en polyuréthane, en polypropylène, en cyclo-oléfines copolymères ou en cyclo-oléfines-polymères.

5. Panneau de décoration (10) selon l'une des revendications précédentes, dans lequel le film décoratif (30) est réalisé en utilisant au moins l'une des matières suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU) et du polyéthylène téréphtalate (PET).

6. Panneau de décoration (10) selon l'une des revendications précédentes, dans lequel la couche de protection (40) est choisie parmi : un film, une couche déposée par pulvérisation, ou une couche injectée.

7. Véhicule automobile (80) comportant au moins un panneau de décoration (10) selon l'une des revendications précédentes.

8. Véhicule automobile (80) selon la revendication précédente, dans lequel la première pièce (70) est fixée sur le panneau de décoration (10) avec un moyen de fixation (55), et les surépaisseurs (60) locales sont aptes à éviter un contact entre le corps principal (20) et le moyen de fixation (55) et/ou la première pièce (70).

9. Véhicule automobile (80) selon l'une des revendications 7 et 8, dans lequel le panneau de décoration (10) est rapporté sur au moins une des secondes pièces de carrosserie suivantes : face avant, aile, porte, toit, hayon, pare-chocs arrière.

10. Procédé de fabrication d'un panneau décoré (10) selon l'une des revendications 1 à 6, à l'aide d'au moins un moule comprenant une chambre de moulage, **caractérisé en ce qu'**il comprend les étapes suivantes :
- moulage du corps principal (20) à partir d'une matière plastique ; et
- surmoulage d'au moins un élément de surface (30, 40) sur au moins une surface (22, 24) du corps principal (20), la chambre de moulage comportant au moins un volume apte à former des surépaisseurs 60 locales du corps principal 20, ou la chambre de moulage comportant au moins un volume apte à former des surépaisseurs 60 locales de l'élément de surface (30, 40) ; ou
- dépose d'au moins un élément de surface (30, 40) comportant une surépaisseur (60), sur au moins une surface (22, 24) du corps principal (20) après moulage du corps principal (20), ou sur au moins une paroi du moule avant moulage du corps principal (20).

11. Procédé selon la revendication précédente, dans lequel on moule le corps principal (20) en injectant au moins l'une des matières suivantes : polyméthacrylate de méthyle, en polyamide, en polycarbonate, en polyuréthane, en polypropylène, en cyclo-oléfines copolymères ou en cyclo-oléfines-polymères.

12. Procédé selon l'une des revendications 10 à 11, le moule comprenant une première partie et une seconde partie, les deux parties délimitant une première chambre de moulage, le procédé comprenant les étapes suivantes :
- dépôt du film décoré (30) sur une paroi de la seconde partie, le film décoré (30) comportant au moins une surépaisseur (60) locale ;
- première fermeture du moule ;
- injection d'une première matière thermoplastique dans la première chambre de moulage afin de surmouler le corps principal (20) sur le film décoré (30) ;
- ouverture du moule ;
- seconde fermeture du moule, de façon à former une seconde chambre de moulage en utilisant une presse rotative ou une translation, la seconde chambre de moulage comportant des volumes aptes à former des surépaisseurs locales (60) de la couche de protection (40) ; et
- injection d'une seconde matière thermoplastique dans la seconde chambre de moulage pour obtenir la couche de protection (40) sur la face opposée (24).

13. Procédé selon l'une des revendications 10 à 12, le moule comprenant une première partie et une seconde partie, les deux parties délimitant une première chambre de moulage, le procédé comprenant les étapes suivantes :
- dépôt du film décoré (30) sur une paroi de la seconde partie ;
- première fermeture du moule ;
- injection d'une première matière thermoplastique dans la première chambre de moulage afin de surmouler le corps principal (20) sur le film décoré (30), la première chambre de moulage comportant des volumes aptes à former les surépaisseurs (60) locales du corps principal (20) ;
- on réalise ainsi une nervure bombée au niveau de la zone de fixation (50), la nervure formant une surépaisseur (60) locale.
- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir la couche de protection (40) sur la face opposée (24).

14. Procédé selon l'une des revendications 10 à 13, le moule comprenant une première partie et une seconde partie, les deux parties délimitant une chambre de moulage, le procédé comprenant les étapes suivantes :
- dépôt de la couche de protection (40) sur une paroi de la seconde partie ;
- première fermeture du moule ;
- injection d'une première matière thermoplastique dans la première chambre de moulage afin de surmouler le corps central (20) sur la couche de protection (40), la première chambre de moulage comportant des volumes aptes à former les surépaisseurs (60) locales du corps principal (20) ;
- ouverture du moule ;
- seconde fermeture du moule, de façon à former une seconde chambre de moulage en utilisant une presse rotative ou une translation ; et
- injection d'une seconde matière thermoplastique dans la seconde chambre de moulage pour obtenir le film décoré (30) sur la face décorée (22).

## Patentansprüche

1. Zierblende (10) für Kraftfahrzeug, aufweisend einen Hauptkörper (20), der aus durchsichtigem oder lichtdurchlässigem Kunststoff realisiert ist, eine Zierfolie (30) auf einer mit Verzierung versehenen Fläche (22) des Hauptkörpers (20), wobei die Zierblende (10) wenigstens eine Zone (50) zum Befestigen eines ersten Teils (70) auf der Zierblende (10) aufweist, wobei die Befestigungszone eine durchgehende Öffnung aufweist, wobei die mit Verzierung versehene Fläche (22) und/oder die gegenüberliegende Fläche (24) lokale Überdicken (60) im Bereich der Befestigungszone (50) aufweist/aufweisen, wobei die Zierblende (10) dazu bestimmt ist, auf dem Kraftfahrzeug auf wenigstens einem der folgenden zweiten Teile angebracht zu werden:
Frontfläche, Kotflügel, Tür, Heckklappe, hinterer Stoßfänger,
wobei die Zierblende (10) wenigstens ein erstes Teil (70) aufweist, das auf der Zierblende (10) mit einem Befestigungsmittel (55) befestigt ist,
wobei die Zierblende **dadurch gekennzeichnet ist, dass** sie eine Schutzschicht (40) auf einer der mit Verzierung versehenen Fläche (22) gegenüberliegenden Fläche (24) aufweist und dass die lokalen Überdicken (60) einen Kontakt zwischen dem Hauptkörper (20) und dem Befestigungsmittel (55) und/oder dem ersten Teil (70) verhindern.

2. Zierblende (10) nach Anspruch 1, wobei die lokalen Überdicken (60) in der Lage sind, die Befestigungszone (50) mechanisch zu verstärken.

3. Zierblende (10) nach einem der vorhergehenden Ansprüche, wobei die lokalen Überdicken (60) eine lokale Überdicke der Zierfolie (30) und/oder eine lokale Überdicke des Hauptkörpers (20) und/oder eine lokale Überdicke der Schutzschicht (40) aufweisen.

4. Zierblende (10) nach einem der vorhergehenden Ansprüche, wobei der Hauptkörper (20) unter Verwendung wenigstens eines der folgenden Materialien realisiert ist: Polymethylmethacrylat, aus Polyamid, aus Polycarbonat, aus Polyurethan, aus Polypropylen, aus Cycloolefin-Copolymeren oder aus Cycloolefin-Polymeren.

5. Zierblende (10) nach einem der vorhergehenden Ansprüche, wobei die Zierfolie (30) unter Verwendung wenigstens eines der folgenden Materialien realisiert ist: lichtdurchlässiges Acrylnitril-Butadien-Styrol (ABS), Polypropylen (PP), Polycarbonat (PC), Polyamid (PA), Polymethylmethacrylat (PMMA), Polyurethan (Polyurethan) und Polyethylenterephthalat (PET).

6. Zierblende (10) nach einem der vorhergehenden Ansprüche, wobei die Schutzschicht (40) ausgewählt ist aus: einer Folie, einer durch Sprühauftrag aufgebrachten Schicht oder einer aufgespritzten Schicht.

7. Kraftfahrzeug (80), aufweisend wenigstens eine Zierblende (10) nach einem der vorhergehenden Ansprüche.

8. Kraftfahrzeug (80) nach dem vorhergehenden Anspruch, wobei das erste Teil (70) auf der Zierblende (10) mit einem Befestigungsmittel (55) befestigt ist und die lokalen Überdicken (60) in der Lage sind, einen Kontakt zwischen dem Hauptkörper (20) und dem Befestigungsmittel (55) und/oder dem ersten Teil (70) zu verhindern.

9. Kraftfahrzeug (80) nach einem der Ansprüche 7 und 8, wobei die Zierblende (10) auf wenigstens einem der folgenden zweiten Karosserieteile angebracht ist: Frontfläche, Kotflügel, Tür, Heckklappe, hinterer Stoßfänger.

10. Verfahren zum Herstellen einer Zierfolie (10) nach einem der Ansprüche 1 bis 6 mit Hilfe eines Formwerkzeugs, das eine Formkammer umfasst, **dadurch gekennzeichnet, dass** es die folgenden Schritte umfasst:
- Formen des Hauptkörpers (20) aus einem Kunststoff; und
- Aufformen wenigstens eines Oberflächenelements (30, 40) auf wenigstens einer Oberfläche (22, 24) des Hauptkörpers (20), wobei die Formkammer wenigstens ein Volumen aufweist, das in der Lage ist, lokale Überdicken (60) des Hauptkörpers (20) zu bilden, oder wobei die Formkammer wenigstens ein Volumen aufweist, das in der Lage ist, lokale Überdicken (60) des Oberflächenelements (30, 40) zu bilden; oder
- Aufbringen wenigstens eines Oberflächenelements (30, 40), das eine Überdicke (60) aufweist, auf wenigstens einer Oberfläche (22, 24) des Hauptkörpers (20) nach Formen des Hauptkörpers (20) oder auf wenigstens einer Wand des Formwerkzeugs vor Formen des Hauptkörpers (20).

11. Verfahren nach dem vorhergehenden Anspruch, bei dem der Hauptkörper (20) geformt wird, indem wenigstens eines der folgenden Materialien eingespritzt wird: Polymethylmethacrylat, aus Polyamid, aus Polycarbonat, aus Polyurethan, aus Polypropylen, aus Cycloolefin-Copolymeren oder aus Cycloolefin-Polymeren.

12. Verfahren nach einem der Ansprüche 10 bis 11, das Formwerkzeug einen ersten Teil und einen zweiten Teil umfasst, wobei die zwei Teile eine erste Formkammer begrenzen, wobei das Verfahren die folgenden Schritte umfasst:
- Aufbringen der Zierfolie (30) auf einer Wand des zweiten Teils, wobei die Zierfolie (30) wenigstens eine lokale Überdicke (60) aufweist;
- erstes Verschließen des Formwerkzeugs;
- Einspritzen eines ersten thermoplastischen Materials in die erste Formkammer, um den Hauptkörper (20) auf der Zierfolie (30) aufzuformen;
- Öffnen des Formwerkzeugs;
- zweites Verschließen des Formwerkzeugs derart, dass eine zweite Formkammer unter Verwendung einer Drehpresse oder einer Translation gebildet wird, wobei die zweite Formkammer Volumina aufweist, die in der Lage sind, lokale Überdicken (60) der Schutzschicht (40) zu bilden; und
- Einspritzen eines zweiten thermoplastischen Materials in die zweite Formkammer, um die Schutzschicht (40) auf der gegenüberliegenden Fläche (24) zu erhalten.

13. Verfahren nach einem der Ansprüche 10 bis 12, das Formwerkzeug einen ersten Teil und einen zweiten Teil umfasst, wobei die zwei Teile eine erste Formkammer begrenzen, wobei das Verfahren die folgenden Schritte umfasst:
- Aufbringen der Zierfolie (30) auf einer Wand des zweiten Teils;
- erstes Verschließen des Formwerkzeugs;
- Einspritzen eines ersten thermoplastischen Materials in die erste Formkammer, um den Hauptkörper (20) auf der Zierfolie (30) aufzuformen, wobei die erste Formkammer Volumina aufweist, die in der Lage sind, lokale Überdicken (60) des Hauptkörpers ((20) zu bilden;
- dadurch Realisieren einer gewölbten Rippe im Bereich der Befestigungszone (50), wobei die Rippe eine lokale Überdicke (60) bildet,
- Öffnen des Formwerkzeugs;
- zweites Verschließen des Formwerkzeugs derart, dass eine zweite Formkammer unter Verwendung einer Drehpresse oder einer Translation gebildet wird; und
- Einspritzen eines zweiten thermoplastischen Materials in die zweite Formkammer, um die Schutzschicht (40) auf der gegenüberliegenden Fläche (24) zu erhalten.

14. Verfahren nach einem der Ansprüche 10 bis 13, das Formwerkzeug einen ersten Teil und einen zweiten Teil umfasst, wobei die zwei Teile eine Formkammer begrenzen, wobei das Verfahren die folgenden Schritte umfasst:
- Aufbringen der Schutzschicht (40) auf einer Wand des zweiten Teils;
- erstes Verschließen des Formwerkzeugs;
- Einspritzen eines ersten thermoplastischen Materials in die erste Formkammer, um den mittigen Körper 111 (20) auf der Schutzschicht (40) aufzuformen, wobei die erste Formkammer Volumina aufweist, die in der Lage sind, lokale Überdicken (60) des Hauptkörpers ((20) zu bilden;
- Öffnen des Formwerkzeugs;
- zweites Verschließen des Formwerkzeugs derart, dass eine zweite Formkammer unter Verwendung einer Drehpresse oder einer Translation gebildet wird; und
- Einspritzen eines zweiten thermoplastischen Materials in die zweite Formkammer, um die Zierfolie (30) auf der mit Verzierung versehenen Fläche (22) zu erhalten.

## Claims

1. A decorative panel (10) for a motor vehicle, comprising a main body (20) made of transparent or translucent plastic, a decorative film (30) on a decorated face (22) of the main body (20), the decorative panel (10) having at least one fixing area (50) of a first piece (70) on the decorative panel (10), said fixing area comprises a through-hole, the decorated face (22) and/or the opposite face (24) having local extra thicknesses (60) at said fixing area (50), the decorative panel (10) being intended to be attached to the motor vehicle on at least one of the following second parts: front face, fender, door, roof, tailgate, rear bumper, the decorative panel comprising at least a first piece (70) attached to the decorative panel (10) with a fastening mean (55), the decorative panel being **characterised in that** it comprises a protective layer (40) on a face opposite (24) to the decorated face (22) and **in that** the local extra thicknesses (60) prevent contact between the main body (20) and the fastening mean (55) and/or the first part (70).

2. Decorative panel (10) according to claim 1, wherein the local extra thicknesses (60) are suitable for mechanically reinforcing the fixing area (50).

3. Decorative panel (10) according to one of the preceding claims, wherein the local extra thicknesses (60) comprise a local extra thickness of the decorative film (30) and/or a local extra thickness of the main body (20) and/or a local extra thickness of the protective layer (40).

4. Decorative panel (10) according to one of the preceding claims, wherein the main body (20) is made using at least one of the following materials: polymethyl methacrylate, polyamide, polycarbonate, polyurethane, polypropylene, cyclo-olefin copolymers or cyclo-olefin polymers.

5. Decorative panel (10) according to one of the preceding claims, wherein the decorative film (30) is made using at least one of the following materials: translucent Acrylonitrile Butadiene Styrene (ABS), Polypropylene (PP), Polycarbonate (PC), Polyamide (PA), Polymethyl Methacrylate (PMMA), Polyurethane (PU) and Polyethylene Terephthalate (PET).

6. Decorative panel (10) according to one of the preceding claims, wherein the protective layer (40) is selected from: a film, a spray-deposited layer, or an injected layer.

7. A motor vehicle (80) having at least one decorative panel (10) according to one of the preceding claims.

8. Motor vehicle (80) according to the preceding claim, wherein the first part (70) is fixed to the decorative panel (10) with a fastening mean (55), and the local extra thicknesses (60) are such as to prevent contact between the main body (20) and the fastening mean (55) and/or the first part (70).

9. Motor vehicle (80) according to one of claims 7 and 8, wherein the decorative panel (10) is attached to at least one of the following second body parts: front end, fender, door, roof, tailgate, rear bumper.

10. A method for making a decorative panel (10) according to one of claims 1 to 6, using at least one mould comprising a moulding chamber, **characterised in that** it comprises the following steps:
- moulding of the main body (20) from a plastic material; and
- overmoulding of at least one surface member (30, 40) onto at least one face (22, 24) of the main body (20), the moulding chamber having at least one volume capable of forming local extra thicknesses (60) of the main body 20, or the moulding chamber having at least one volume capable of forming local extra thicknesses (60) of the surface member (30, 40) ; or
- Depositing at least one surface member (30, 40) with an extra thickness (60) on at least one face (22, 24) of the main body (20) after the main body has been moulded (20), or on at least one wall of the mould before the main body has been moulded (20).

11. Method according to the preceding claim, wherein the main body (20) is moulded by injecting at least one of the following materials: polymethyl methacrylate, polyamide, polycarbonate, polyurethane, polypropylene, cyclo-olefin copolymers or cyclo-olefin polymers.

12. Method according to one of claims 10 to 11, the mould comprising a first part and a second part, the two parts delimiting a first moulding chamber, the process comprising the following steps:
- deposit of the decorative film (30) on a wall of the second part, the decorative film (30) having at least one local extra thickness (60);
- first mold closing;
- injection of a first thermoplastic material into the first moulding chamber in order to overmould the main body (20) onto the ecorative film (30);
- mould opening;
- a second closure of the mould so as to form a second moulding chamber by means of a rotary press or translation, the second moulding chamber having volumes capable of forming local extra thicknesses (60) of the protective layer (40); and
- Injection of a second thermoplastic material into the second moulding chamber to obtain the protective layer (40) on the opposite face (24).

13. Method according to one of claims 10 to 12, the mould comprising a first part and a second part, the two parts delimiting a first moulding chamber, the process comprising the following steps:
- deposit of the decorative film (30) on a wall of the second part;
- first mold closing;
- injection of a first thermoplastic material into the first moulding chamber in order to overmould the main body (20) onto the decorative film (30), the first moulding chamber comprising volumes capable of forming the local extra thicknesses (60) of the main body (20);
- In this way, a domed rib is made at the area of fixation (50), the rib forming a local extra thickness (60).
- mould opening;
- second closure of the mould, so as to form a second moulding chamber using a rotary press or translation; and
- Injection of a second thermoplastic material into the second moulding chamber to obtain the protective layer (40) on the opposite face (24).

14. Method according to one of claims 10 to 13, the mould comprising a first part and a second part, the two parts delimiting a moulding chamber, the process comprising the following steps:
- Deposit of the protective layer (40) on a wall of the second part;
- first mold closing;
- injection of a first thermoplastic material into the first moulding chamber in order to overmould the main body (20) on the protective layer (40), the first moulding chamber having volumes capable of forming the local extra thicknesses (60) of the main body (20);
- mould opening;
- second closure of the mould, so as to form a second moulding chamber using a rotary press or translation; and
- Injection of a second thermoplastic material into the second moulding chamber to obtain the decorative film (30) on the decorated face (22).
